# EUROPÄISCHE PATENTANMELDUNG

(11) **EP 2 590 199 A1**
(43) Veröffentlichungstag der Anmeldung: **08.05.2013**
(21) Anmeldenummer: 11187495.4
(22) Anmeldetag: 02.11.2011
(51) Int. Cl.: H01H 71/12, H01H 71/74, H01H 73/20, H01H 47/00

(54) **Leistungsschalter mit mindestens einem Kontakt zum Spannungabgriff**

(71) Anmelder: Eaton Industries GmbH, 53115 Bonn (DE)
(72) Erfinder: Suchalla, Marc, 47198 Duisburg (DE); Scislak, Ireneusz, 50769 Köln (DE); Tanda, Kurt, 51377 Leverkusen (DE); Freyermuth, Thomas, 53505 Kalenborn (DE); Schmidt, Rainer, 53757 Sankt Augustin (DE); Zumbeck, Alexander, 53332 Bornheim (DE); Reidt, Georg, 53913 Swisstal (DE)
(74) Vertreter: Leadbetter, Benedict

(57) **Zusammenfassung**

Die Erfindung betrifft einen Leistungsschalter mit einem Schaltergehäuse (1) und mit mindestens einem Kontakt (7) zum Abgreifen einer Spannung an einem Primärleiter (3).

## Beschreibung

Die Erfindung betrifft einen Leistungsschalter mit einem Schaltergehäuse und mit mindestens einem Kontakt zum Abgreifen einer Spannung an einem Primärleiter.

Für eine Energiemessung an einem Leistungsschalter, beispielsweise für eine Energieverbrauchsanalyse, wird ein Spannungsabgriff benötigt. Bisher wurde dazu ein externes Gerät außerhalb des Leistungsschalters eingesetzt. Um die Energiemessung im Schalter selbst durchführen zu können, wird auch ein interner Spannungsabgriff im Schalter notwendig. Aus der Druckschrift US 2009/0190289 A1 ist ein Leistungsschalter bekannt, bei dem ein Spannungsabgriff in dem Leistungsschalter selbst integriert ist, so dass auf ein externes Modul verzichtet werden kann. Der Abgriff einer derart hohen Spannung, wie sie an einem Primärleiter eines Leistungsschalters anliegt, erfordert eine Reduzierung der Spannung mit Hilfe von Spannungsteilern bis auf ein für eine Messelektronik verträgliches Maß. Das Hochspannungssignal über Leiterbahnen, Leitungen, Adapter und Kontakte zu führen, kann Verschmutzung, hohen Temperaturen, zu möglichen Kriechstrecken und störender Beeinflussung der Elektronik durch elektrische oder elektromagnetische Effekte führen. Eine Schwierigkeit besteht unter diesen Umständen darin, ausreichend Platz für die notwendigen zusätzliche Elemente in einem Schaltergehäuse zu schaffen und eine sichere Kontaktierung zu dem Primärleiter zu gewährleisten.

Eine Aufgabe der Erfindung besteht darin, eine hinsichtlich der genannten Schwierigkeiten verbesserte Kontaktierung für den internem Spannungsabgriff bei einem Leistungsschalter zur Verfügung zu stellen.

Die Aufgabe wird durch den Leistungsschalter gemäß dem Hauptanspruch gelöst. In den Unteransprüchen sind bevorzugte Ausführungsformen, sowie vorteilhafte Weiterbildungen angegeben.

Der erfindungsgemäße Leistungsschalter weist ein Schaltergehäuse und mindestens einem Kontakt zum Abgreifen einer Spannung an einem Primärleiter auf. Das Schaltergehäuse im Sinne der Erfindung stellt die äußere Begrenzung des Leistungsschalters dar und beinhaltet alle wesentlichen Komponenten. So ist auch ein gegebenenfalls getrennt vorliegendes Wandlergehäuse durch das Schaltergehäuse umfasst. Erfindungsgemäß ist zu einer Herstellung des Kontakts zu dem Primärleiter mindestens ein Federelement vorgesehen. Das Federelement kann dabei eine durch Federwirkung unterstützte Vorrichtung oder eine Feder im Sinne eines elastischen Bauteils an sich sein. Zur Kontaktierung ist das Federelement entweder selbst elektrisch leitend oder es unterstützt ein elektrisch leitendes Bauteil. Ein Vorteil bei der Verwendung eines Federelements besteht darin, eine sichere und fehlertolerantere Kontaktierung mit Primärleiter zu gewährleisten. Vorzugsweise ist ein Spannungsteiler zur Reduzierung der abgegriffenen Spannung des Primärleiters zwischen dem Federelement und einer Schalterelektronik angeordnet.

Gemäß einer ersten bevorzugten Ausführungsform ist vorgesehen, dass der Spannungsteiler auf einer Leiterplatte angeordnet ist, wobei das Federelement an der Leiterplatte angelenkt ist.

Gemäß einer zweiten bevorzugten Ausführungsform ist vorgesehen, dass der Spannungsteiler über eine Leiterbahn mit dem Federelement verbunden ist.

Die Leiterplatte gemäß der ersten Ausführungsform ist vorzugsweise an dem Schaltergehäuse angeordnet. Besonders bevorzugt ist die Leiterplatte in einer Seitenwand des Schaltergehäuses angeordnet, insbesondere in derjenigen Seitenwand des Schaltergehäuses, durch welche der Primärleiter in das Schaltergehäuse geführt ist.

Weitere bevorzugte Ausgestaltungen, die für die erste und zweite Ausführungsform anwendbar sind, sehen vor, dass das Federelement durch eine Spiralfeder gebildet ist, oder dass das Federelement durch eine Blattfeder gebildet ist, oder dass das Federelement durch eine elastisch spannbare, teleskopierbare Anordnung, insbesondere einen sogenannten spring-load contact, gebildet ist.

Eine weitere bevorzugte Ausgestaltungen, die für die erste und zweite Ausführungsform anwendbar ist, besteht darin, dass das Federelement durch eine Mehrzahl von Blattfedern im Sinne eines federnden Kammkontakts gebildet ist, wobei die Blattfedern in einer Aufnahmeöffnung für den Primärleiter angeordnet sind. Die Aufnahmeöffnung für den Primärleiter ist dabei insbesondere in einem Wandlerblock angeordnet. Ein Kontakt der Blattfedern des Federelements mit dem Primärleiter ist so vorteilhaft bei einer Montage des Primärleiters herstellbar.

Einer Mehrzahl von Primärleitern bei einem mehrpoligen Leistungsschalter ist vorzugsweise eine entsprechende Anzahl von Kontakten zum Abgreifen der Spannung zugeordnet. In dem Fall ist weiterhin bevorzugt eine Mehrzahl von Leiterplatten vorhanden, die in einem gemeinsamen Adaptersammelgehäuse angeordnet sind.

Nachfolgend wird die Erfindung anhand von Ausführungsbeispielen mit Bezug auf die Zeichnungen näher erläutert. Die Ausführungen sind lediglich beispielhaft und schränken den allgemeinen Erfindungsgedanken nicht ein.

### Es zeigen

Figur 1 eine Ausführungsform des erfindungsgemäßen Leistungsschalters mit drei unterschiedlichen Ausführungsbeispielen eines Kontaktelements;
Figur 2 ein Adaptersammelgehäuse zur Aufnahme der Adapter gemäß Figur 1;
Figur 3 ein Kontaktelement gemäß Figur 1 im Detail;
Figur 4 ein weiteres Kontaktelement gemäß Figur 1 im Detail;
Figur 5 noch ein weiteres Kontaktelement gemäß Figur 1 im Detail;
Figur 6 eine weitere Ausführungsform des erfindungsgemäßen Leistungsschalters;
Figur 7 ein Detail der Ausführungsformgemäß Figur 6.

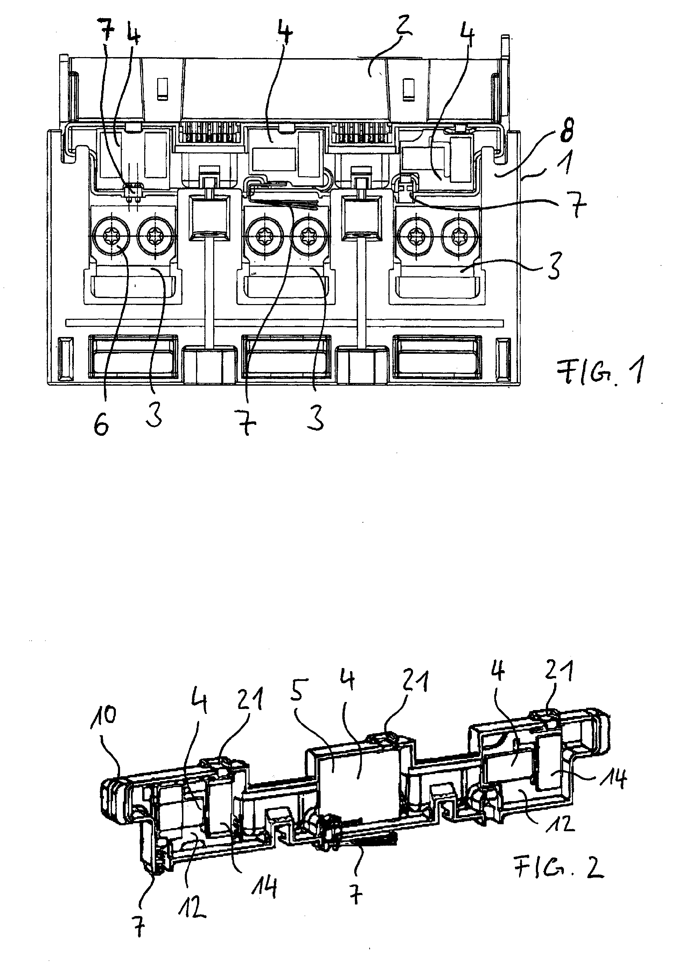

In der Figur 1 ist eine Ausführungsform des erfindungsgemäßen Leistungsschalters in einer Teilansicht dargestellt. Erkennbar ist die Seitewand 8 des Schaltergehäuses 1, durch welche die Primärleiter 3 in das Schaltergehäuse 1 geführt sind, innerhalb dessen sich ein Wandler des Leistungsschalters befindet. Der in dem dargestellten Ausführungsbeispiel innerhalb des Gehäuses 1 nicht sichtbar angeordnete Wandler kann bei abweichenden Bauformen von Leistungsschaltern ein eigenes Wandlergehäuse aufweisen, welches beispielsweise außen an dem eigentlichen Schaltergehäuse 1 angeordnet ist. Im Sinne der Erfindung soll auch in dem Fall das Wandlergehäuse als Teil des Schaltergehäuses verstanden werden. Primärleiter 3 führen in das Innere des Schaltergehäuses 1 hinein, erstrecken sich durch den Wandlerblock hindurch und verlaufen anschließend weiter in die eigentliche Schaltkammer (nicht dargestellt) des Leistungsschalters hinein. Die Primärleiter 3 sind durch Befestigungsmittel 6, in der Regel Schrauben, an dem Wandler befestigt. Ein Elektronikmodul 2 ist auf dem Wandler angeordnet. Die darin angeordneten elektronischen Schaltungen dienen zur Steuerung des Leistungsschalters anhand der durch den Wandler übertragenen Signale.

Erfindungsgemäß weist der Leistungsschalter mindestens einen Kontakt zum Abgriff einer Spannung an einem der Primärleiter 3 auf. In der Figur 2 sind Spannungsteiler 14 zur Reduzierung der abgegriffenen Spannung des Primärleiters 3 erkennbar, welche zwischen die Federelemente 7 und die Schalterelektronik 2 geschaltet sind. Die Spannungsteiler 14 sind auf Leiterplatten 12 angeordnet, wobei die Federelemente 7 an den Leiterplatten 12 angelenkt sind. Die Leiterplatten 12 mit Spannungsteilern 14, Anschlüssen für die Federelemente 7 und Anschlüssen 21 zur Weiterleitung eines Signals an die Schalterelektronik 2 bilden einen Adapter 4, welcher ein Gehäuse und/oder einen Gehäusedeckel 5 aufweisen kann. Die adapter 4 sind in der Ausführungsform in einem Adaptersammelgehäuse 10 untergebracht, mit dem sie in eine Ausnehmung der Seitenwand 8 des Schaltergehäuses 1 entsprechend Figur 1 eingesetzt werden.

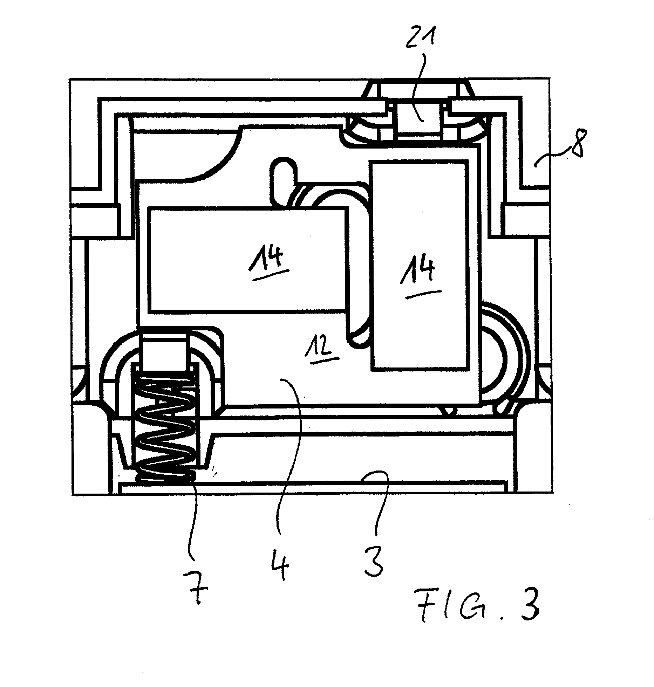

Gemäß der Darstellung in Figur 1 sind innerhalb des Schaltergehäuses 1 drei Adapter 4 mit Leiterplatten 12 zur Reduzierung der abgegriffenen Spannungen der drei Primärleiter 3 vorgesehen. Die Figuren 3, 4 und 5 zeigen jeweils einen Adapter 4 mit Federelement 7 im Detail. Die Reduzierung der Spannung erfolgt durch die Spannungsteiler 14. Die dazu vorgesehenen Widerstände sind auf den Leiterplatten 12 angeordnet. Die Adapter 4 sind vorzugsweise außerhalb des Elektronikmoduls 2 angeordnet, um eine Beeinflussung der Elektronik durch elektrische oder elektromagnetische Effekte zu verringern.

Die Darstellung in Figur 1 illustriert eine Variante der Positionierung der Adapter 4, die hier innerhalb der Seitenwand 8 angeordnet sind, vorzugsweise in einem gemeinsamen Adaptersammelgehäuse 10, das in der Figur 2 einzeln dargestellt ist. Dazu ist die Seitenwand 8 teilweise aufgebrochen dargestellt. Diese Position ist besonders vorteilhaft, da eine Kontaktierung der Primärleiter 1 erfindungsgemäß mittels eines Federelements 7 über deren Oberfläche oder über Befestigungsmittel der Primärleiter 3 erfolgen kann. Dazu kann die Seitenwand 8 entsprechende Kanäle oder Bohrungen zwischen den Adaptern 4 und den Primärleitern 3 aufweisen. Außerdem kann die Weiterleitung des reduzierten Spannungssignals zu dem Elektronikmodul 2 auf direktem Weg erfolgen, wie nachfolgend im Zusammenhang mit den Figuren 3, 4 und 5 erläutert wird. Die verschiedenen Adapter 4 dienen hier lediglich zur Veranschaulichung von möglichen Ausführungsbeispielen des Federelements 7. In der Regel werden in einem Leistungsschalter gleichartige Adapter 4 eingesetzt.

In den Figuren 3, 4 und 5 ist jeweils eines der Federelemente 7 gemäß Figur 1 im Detail dargestellt. Die Kontaktelemente 7 stellen den Kontakt zu dem jeweiligen Primärleiter 3 her. Ansonsten sind auf der jeweiligen Leiterplatte 12 der Adapter 4 beispielhaft Spannungsteiler 14 angedeutet.

Das Kontaktelement 7 gemäß Figur 3 umfasst eine an der Leiterplatte 12 befestigte und angeschlossene Druckfeder in Form einer Spirale, die gegen die Oberfläche des Primärleiters 3 oder auch gegen eine Befestigungsschraube des Primärleiters 3 vorgespannt ist und die Hochspannung von dem Primärleiter 3 zu dem Adapter 4 überträgt.

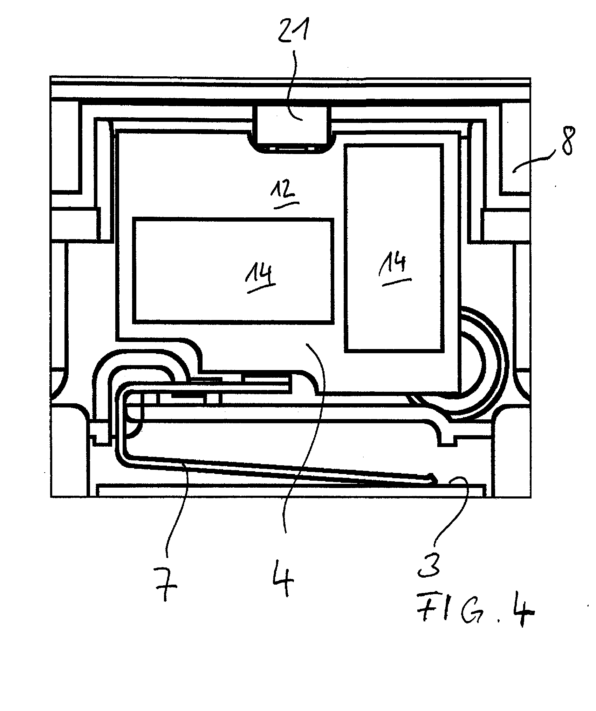

Das Kontaktelement 7 gemäß Figur 4 umfasst eine an der Leiterplatte 12 befestigte und angeschlossene Blattfeder, die gegen die Oberfläche des Primärleiters 3 oder auch gegen eine Befestigungsschraube des Primärleiters 3 vorgespannt ist und die Hochspannung von dem Primärleiter 3 zu dem Adapter 4 überträgt.

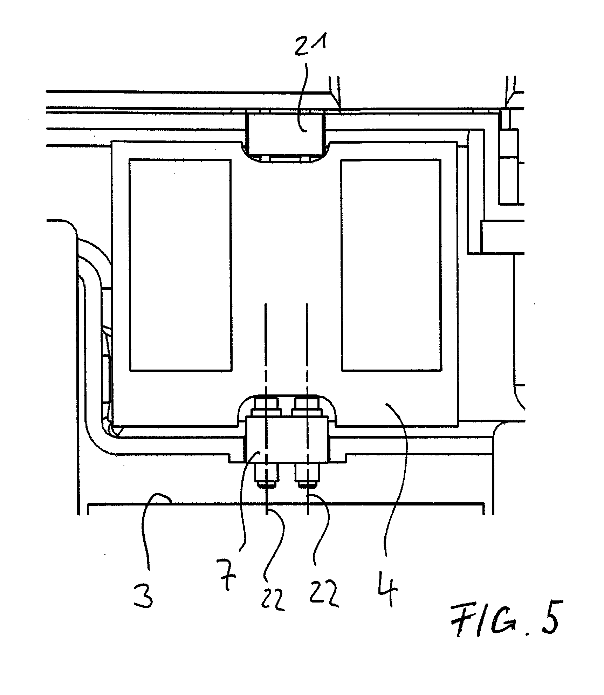

Das Kontaktelement 7 gemäß Figur 5 umfasst einen an der Leiterplatte 12 befestigten und angeschlossenen sogenannten spring-load Kontakt, dessen zwei insbesondere teleskopierbare Kontaktstifte 22 mittels Federkraft gegen die Oberfläche des Primärleiters 3 oder auch gegen eine Befestigungsschraube des Primärleiters 3 vorgespannt sind und die Hochspannung von dem Primärleiter 3 zu dem Adapter 4 übertragen. Die Lage der Kontaktstifte 22 ist durch Linien lediglich angedeutet.

Vergleichbare Kontaktelemente können auch zur Übertragung des reduzierten Spannungssignals an das Elektronikmodul 2 genutzt werden. Die Kontakte zu dem Elektronikmodul sind in den Figuren 3 bis 5 mit dem Bezugszeichen 21 gekennzeichnet.

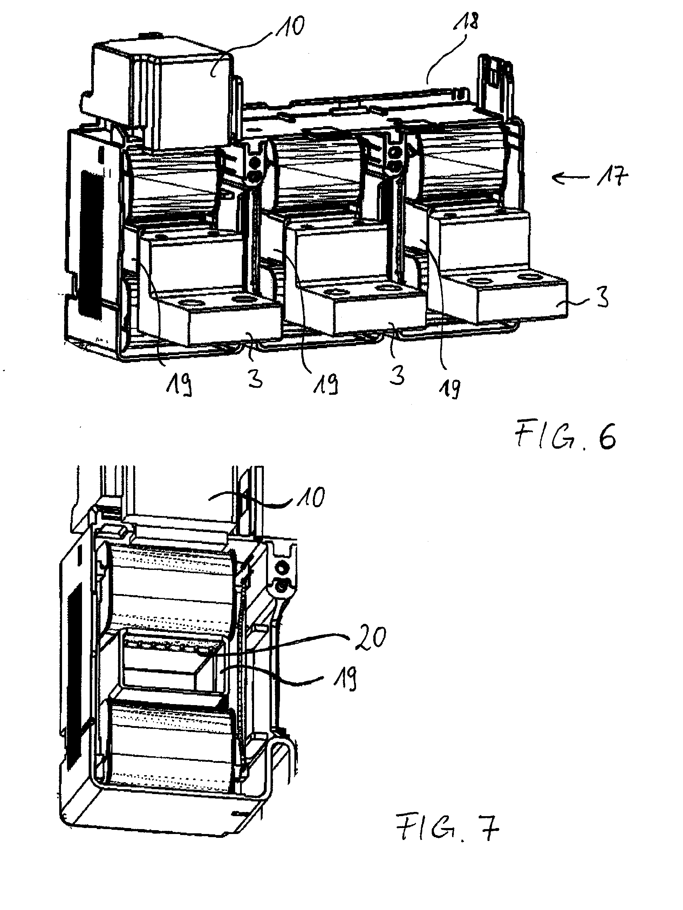

Die Figuren 6 und 7 zeigen eine weitere Ausführungsform des erfindungsgemäßen Leistungsschalters. In der Figur 6 ist der Wandler 17 ohne das Schaltergehäuse 1 dargestellt. Eine Aufnahme 18 ist für das Einsetzen des Elektronikmoduls 2 vorbereitet. Des Weiteren ist zur besseren Erkennbarkeit eine Vergussmasse nicht dargestellt, so dass Einschübe 19 erkennbar sind, durch die die Primärleiter 3 eingeschoben werden. Ein federnder Kammkontakt 20 ist in der Detailansicht gemäß Figur 7 erkennbar, in der auch der Primärleiter 3 nicht dargestellt ist. Der Kontakt wird bei der Montage des Primärleiters 3 in dem Wandler 17 dauerhaft hergestellt. Die Adapter 4 mit den Leiterplatten 12 und den Spannungsteilern 14 zur Reduzierung der Spannung befinden sich in der dargestellten Ausführungsform in einem Adaptersammelgehäuse 10 und sind über nicht dargestellte Leiterbahnen mit den federnden Kammkontakten 20 verbunden.

### Bezugszeichenliste

- 1: Schaltergehäuse
- 2: Schaltelektronik, Elektronikmodul
- 3: Primärleiter
- 4: Adapter
- 5: Adapterdeckel
- 6: Befestigungsmittel
- 7: Federelement, Kontaktelement
- 8: Seitenwand
- 10: Adaptersammelgehäuse
- 12: Leiterplatte
- 14: Spannungsteiler
- 17: Wandler
- 18: Aufnahme
- 19: Einschub
- 20: Blattfederanordnung, federnder Kammkontakt
- 21: Kontakt zum Elektronikmodul
- 22: Kontaktstifte

## Patentansprüche

1. Leistungsschalter mit einem Schaltergehäuse (1) und mit mindestens einem Kontakt zum Abgreifen einer Spannung an einem Primärleiter (3), **dadurch gekennzeichnet, dass** zu einer Herstellung des Kontakts zu dem Primärleiter (3) mindestens ein Federelement (7, 20) vorgesehen ist.

2. Leistungsschalter nach Anspruch 1, **dadurch gekennzeichnet, dass** ein Spannungsteiler (14) zur Reduzierung der abgegriffenen Spannung des Primärleiters (3) zwischen dem Federelement (7, 20) und einer Schalterelektronik (2) angeordnet ist.

3. Leistungsschalter nach Anspruch 2, **dadurch gekennzeichnet, dass** der Spannungsteiler (14) auf einer Leiterplatte (12) angeordnet ist, wobei das Federelement (7) an der Leiterplatte angelenkt ist.

4. Leistungsschalter nach Anspruch 2, **dadurch gekennzeichnet, dass** der Spannungsteiler (14) über eine Leiterbahn mit dem Federelement (20) verbunden ist.

5. Leistungsschalter nach Anspruch 3, **dadurch gekennzeichnet, dass** die Leiterplatte (12) an dem Schaltergehäuse (1) angeordnet ist.

6. Leistungsschalter nach einem der Ansprüche 3 oder 5, **dadurch gekennzeichnet, dass** die Leiterplatte (12) in einer Seitenwand (8) des Schaltergehäuses (1) angeordnet ist.

7. Leistungsschalter nach Anspruch 6, **dadurch gekennzeichnet, dass** die Leiterplatte (12) in derjenigen Seitenwand (8) des Schaltergehäuses (1) angeordnet ist, durch welche der Primärleiter (3) in das Schaltergehäuse geführt ist.

8. Leistungsschalter nach einem der vorhergehenden Ansprüche, **dadurch gekennzeichnet, dass** das Federelement (7) durch eine Spiralfeder gebildet ist.

9. Leistungsschalter nach einem der Ansprüche 1 bis 7, **dadurch gekennzeichnet, dass** das Federelement (7) durch eine Blattfeder gebildet ist.

10. Leistungsschalter nach einem der Ansprüche 1 bis 7, **dadurch gekennzeichnet, dass** das Federelement (7) durch eine elastisch spannbare, teleskopierbare Anordnung gebildet ist.

11. Leistungsschalter nach einem der Ansprüche 1 bis 7, **dadurch gekennzeichnet, dass** das Federelement (20) durch Mehrzahl von Blattfedern gebildet ist, wobei die Blattfedern in einer Aufnahmeöffnung (18) für den Primärleiter (3) angeordnet sind.

12. Leistungsschalter nach Anspruch 11, **dadurch gekennzeichnet, dass** die Aufnahmeöffnung (18) für den Primärleiter in einem Wandlerblock (17) angeordnet ist.

13. Leistungsschalter nach einem der Ansprüche 11 oder 12, **dadurch gekennzeichnet, dass** ein Kontakt der Blattfedern des Federelements (20) mit dem Primärleiter (3) bei einer Montage des Primärleiters herstellbar ist.

14. Leistungsschalter nach einem der vorhergehenden Ansprüche, **dadurch gekennzeichnet, dass** einer Mehrzahl von Primärleitern (3) bei einem mehrpoligen Leistungsschalter eine entsprechende Anzahl von Kontakten zum Abgreifen der Spannung zugeordnet ist.

15. Leistungsschalter nach Anspruch 14, **dadurch gekennzeichnet, dass** eine Mehrzahl von Leiterplatten (12) in einem gemeinsamen Adaptergehäuse (10) angeordnet ist.
